# EUROPEAN PATENT APPLICATION

(11) **EP 4 407 856 A1**
(43) Date of publication of application: **31.07.2024**
(21) Application number: 22941521.1
(22) Date of filing: 14.12.2022
(51) Int. Cl.: H02M 7/217, H02M 3/335, H02J 3/02

(54) **SOLID STATE TRANSFORMER**

(30) Priority: 13.05.2022 CN 202210521951
(71) Applicant: Huawei Digital Power Technologies Co., Ltd., Shenzhen, Guangdong 518043 (CN)
(72) Inventor: LUO, Tao, Shenzhen, Guangdong 518043 (CN); REN, Biao, Shenzhen, Guangdong 518043 (CN); JING, Xiaming, Shenzhen, Guangdong 518043 (CN)
(74) Representative: Gill Jennings & Every LLP
(86) International application number: PCT/CN2022/138940
(87) International publication number: WO 2023/216586

(57) **Abstract**

This application provides a solid-state transformer. The solid-state transformer in this application includes a first phase circuit. An input end of the first phase circuit is connected to a single-phase medium-voltage alternating current, an output end is connected to an output end of a low-voltage direct current, and the first phase circuit includes N power units. Each power unit includes an input end and an output end. Input ends of the N power units included in the first phase circuit are connected in series and are connected to the single-phase medium-voltage alternating current. Output ends the N power units are connected in parallel and are connected to the output end of the low-voltage direct current. The solid-state transformer further includes a low-voltage side auxiliary power supply circuit. The low-voltage side auxiliary power supply circuit is connected to the output end of the low-voltage direct current. First direct currents output from the output ends of the N power units are used to supply power to the low-voltage side auxiliary power supply circuit, and the first direct current is the low-voltage direct current. The solid-state transformer provided in this application uses a low-voltage direct current output of the solid-state transformer, namely, the first direct current, to supply power to the low-voltage side auxiliary power supply circuit, so that costs of the solid-state transformer can be reduced, and reliability of power supply to the low-voltage side auxiliary power supply circuit is improved.

## Description

This application claims priority to Chinese Patent Application No. 202210521951.8, filed with the China National Intellectual Property Administration on May 13, 2022 and entitled "SOLID-STATE TRANSFORMER", which is incorporated herein by reference in its entirety.

### TECHNICAL FIELD

This application relates to the field of power electronic technologies, and in particular, to a solid-state transformer.

### BACKGROUND

In the field of power electronic technologies, a transformer is an important component of a power system. The transformer can implement voltage level conversion (for example, conversion from a high-voltage alternating current to a low-voltage alternating current, or conversion from a low-voltage alternating current to a high-voltage alternating current) and electrical isolation (for example, high-voltage electrical isolation).

In a current conventional technology, a solid-state transformer (solid-state transformer, SST) is usually used for voltage level conversion. The SST is a medium-voltage to low-voltage power conversion system that uses high-frequency isolation. An input is usually a three-phase medium-voltage alternating current, and an output is a low-voltage direct current or alternating current. Each phase circuit of a three-phase medium-voltage alternating current input includes several power units connected in series at a medium-voltage side and connected in parallel at a low-voltage side. Each power unit includes a high-voltage side power circuit, an intermediate-frequency transformer, and a low-voltage side power circuit. The low-voltage side power circuit includes a low-voltage side detection circuit, a low-voltage side control circuit, a low-voltage side communication circuit, and a low-voltage side fan circuit. The low-voltage side detection circuit, the low-voltage side control circuit, the low-voltage side communication circuit, and the low-voltage side fan circuit are powered by a low-voltage side auxiliary power supply (auxiliary power supply, APS) circuit. The low-voltage side auxiliary power supply circuit is powered by a power frequency transformer. For example, the power frequency transformer converts a 10-kilovolt (kV) medium-voltage alternating current to a 220-volt (V) alternating current, and then supplies power to the low-voltage side auxiliary power supply circuit.

However, the power frequency transformer is costly and heavy, and consequently use costs of the solid-state transformer are high. In addition, 10 kV medium-voltage insulation is required. Therefore, how to reduce the costs of the solid-state transformer becomes an urgent technical problem to be resolved.

### SUMMARY

This application provides a solid-state transformer, so that use costs of a solid-state transformer can be reduced.

According to a first aspect, this application provides a solid-state transformer. The solid-state transformer includes a first phase circuit. An input end of the first phase circuit is connected to a single-phase medium-voltage alternating current, and an output end is connected to an output end of a low-voltage direct current. The first phase circuit includes N power units, and N is an integer greater than or equal to 1. Each of the N power units includes an input end and an output end. Input ends of the N power units included in the first phase circuit are connected in series and are connected to the single-phase medium-voltage alternating current, and output ends of the N power units included in the first phase circuit are connected in parallel and are connected to the output end of the low-voltage direct current. The solid-state transformer further includes a low-voltage side auxiliary power supply circuit. The low-voltage side auxiliary power supply circuit is connected to the output end of the low-voltage direct current. First direct currents output from the output ends of the N power units are used to supply power to the low-voltage side auxiliary power supply circuit, and the first direct current is the low-voltage direct current.

In this aspect, the low-voltage direct current output by the solid-state transformer, namely, the first direct current, is used to supply power to the low-voltage side auxiliary power supply circuit. Compared with the conventional technology, no additional power frequency transformer and 10-kilovolt medium-voltage insulation are required. This can reduce use costs of the solid-state transformer.

With reference to the first aspect, in a possible implementation, that the solid-state transformer further includes a low-voltage side auxiliary power supply circuit includes: The low-voltage side auxiliary power supply circuit supplies power to at least a part of functional circuits in a low-voltage side power circuit in each power unit.

With reference to the first aspect, in a possible implementation, the low-voltage side auxiliary power supply circuit supplies power to the at least a part of functional circuits in the low-voltage side power circuit in each power unit, and the at least a part of functional circuits include, but not limited to, a low-voltage side detection circuit, a low-voltage side control circuit, a low-voltage side communication circuit, and a low-voltage side fan circuit.

With reference to the first aspect, in a possible implementation, that the first phase circuit includes N power units includes: Each of the N power units includes a high-voltage side power circuit, an intermediate-frequency transformer, and a low-voltage side power circuit that are sequentially connected. That each power unit includes an input end and an output end includes: The input end is an input end of the high-voltage side power circuit, and the output end is an output end of the low-voltage side power circuit.

With reference to the first aspect, in a possible implementation, the solid-state transformer includes the first phase circuit; and the solid-state transformer further includes a second phase circuit and a third phase circuit. Output ends of the first phase circuit, the second phase circuit, and the third phase circuit are connected in parallel and are connected to the output end of the low-voltage direct current. The first phase circuit, the second phase circuit, and the third phase circuit have a same circuit structure. The first phase circuit is any one of the first phase circuit, the second phase circuit, and the third phase circuit.

With reference to the first aspect, in a possible implementation, starting from an input point of the single-phase medium-voltage alternating current of the first phase circuit, the N power units are sequentially represented as a power unit 1, a power unit 2, ..., and a power unit N. The first phase circuit includes a power unit X, and the power unit X is any one of the N power units. When the solid-state transformer is started, if the solid-state transformer includes the first phase circuit, a first direct current output by the power unit X in the first phase circuit is used to supply power to the low-voltage side auxiliary power supply circuit; or if the solid-state transformer includes a multi-phase circuit, first direct currents output by power units X at identical positions in all phase circuits of the multi-phase circuit are used to supply power to the low-voltage side auxiliary power supply circuit.

In this implementation, the first direct current output by the power unit X in the first phase circuit or the first direct currents in all the phase circuits of the multi-phase circuit are used to supply power to the low-voltage side auxiliary power supply circuit, that is, each phase uses the power unit X, to facilitate control of the solid-state transformer in a use process. In addition, each phase may supply power to the low-voltage side auxiliary power supply circuit, that is, each phase circuit may independently supply power to the low-voltage side auxiliary power supply circuit and back up each other, so that reliability of power supply to the low-voltage side auxiliary power supply circuit can be improved.

With reference to the first aspect, in a possible implementation, when a voltage in the solid-state transformer reaches a preset stable voltage value, all power units in the first phase circuit or in each phase circuit of the multi-phase circuit output first direct currents to supply power to the low-voltage side auxiliary power supply circuit.

In this implementation, when the voltage in the solid-state transformer reaches the preset stable voltage value, a switch unit is turned on, and all power units in the first phase circuit or in each phase circuit of the multi-phase circuit supply power to the low-voltage side auxiliary power supply circuit. Compared with the conventional technology, costs are low, and the reliability of power supply to the low-voltage side auxiliary power supply circuit is high.

With reference to the first aspect, in a possible implementation, the low-voltage side auxiliary power supply circuit is specifically configured to: convert the first direct current to a second direct current required by the low-voltage side power circuit, where a voltage of the second direct current is less than or equal to a voltage of the first direct current.

With reference to the first aspect, in a possible implementation, the first phase circuit further includes the switch unit. The switch unit is connected between the power unit X and an output end that is in the solid-state transformer and that is connected to a load. The switch unit is configured to: when the solid-state transformer is started, disconnect the power unit X from the output end that is in the solid-state transformer and that is connected to the load; and when the voltage in the solid-state transformer reaches the preset stable voltage value, connect the power unit X to the output end that is in the solid-state transformer and that is connected to the load.

In this implementation, the switch unit is used to control power supply to the load, so that a low load voltage caused by a low low-voltage side direct current output when the solid-state transformer is started can be prevented.

With reference to the first aspect, in a possible implementation, the switch unit includes a relay or a semiconductor power switch.

In this implementation, power supply to the load may be controlled by turning on and turning off the relay or the semiconductor power switch, to prevent the low load voltage caused by the low low-voltage side direct current output when the solid-state transformer is started.

With reference to the first aspect, in a possible implementation, the solid-state transformer further includes a standby energy storage apparatus. The standby energy storage apparatus is connected to the low-voltage side auxiliary power supply circuit. When all low-voltage side power circuits in the solid-state transformer cannot supply power to the low-voltage side auxiliary power supply circuit, the standby energy storage apparatus is configured to supply power to the low-voltage side auxiliary power supply circuit.

In this implementation, the standby energy storage apparatus stores electric energy when the solid-state transformer works normally, and supplies power to the low-voltage side auxiliary power supply circuit in an emergency when all power units in the solid-state transformer cannot supply power to the low-voltage side auxiliary power supply circuit. Therefore, it may be determined that the solid-state transformer is faulty, and a fault signal is sent out, so that related personnel can discover and handle a problem in time, and then the reliability of power supply to the low-voltage side auxiliary power supply circuit is improved.

With reference to the first aspect, in a possible implementation, the standby energy storage apparatus includes a battery or a capacitor.

In this implementation, the low-voltage side auxiliary power supply circuit may be powered by using the battery or the capacitor, to improve the reliability of power supply to the low-voltage side auxiliary power supply circuit.

With reference to the first aspect, in a possible implementation, the single-phase medium-voltage alternating current is an alternating current with a voltage value greater than or equal to a first threshold, and the low-voltage direct current is a direct current with a voltage value less than the first threshold.

With reference to the first aspect, in a possible implementation, that each power unit includes a high-voltage side power circuit, an intermediate-frequency transformer, and a low-voltage side power circuit that are sequentially connected specifically includes: N high-voltage side power circuits that are in the first phase circuit and that have a one-to-one correspondence with the N power units perform voltage division on the single-phase medium-voltage alternating current. An output end of the high-voltage side power circuit is connected to an input end of the intermediate-frequency transformer. The high-voltage side power circuit is configured to: input a first alternating current at a first frequency, convert the first alternating current to a second alternating current at a second frequency, and output the second alternating current, where the second frequency is greater than the first frequency, and the first alternating current is a medium-voltage alternating current. An output end of the intermediate-frequency transformer is connected to an input end of the low-voltage side power circuit. The intermediate-frequency transformer is configured to: input the second alternating current, and convert the second alternating current to a third alternating current at the second frequency. The intermediate-frequency transformer is further configured to electrically isolate the high-voltage side power circuit from the low-voltage side power circuit. The low-voltage side power circuit is configured to: input the third alternating current, convert the third alternating current to the first direct current, and output the first direct current.

In this implementation, the high-voltage side power circuit, the intermediate-frequency transformer, and the low-voltage side power circuit included in each power unit finally convert the alternating current to a low-voltage direct current output, to supply power to the load and the low-voltage side auxiliary power supply circuit, so that the use costs of the solid-state transformer are reduced.

With reference to the first aspect, in a possible implementation, the high-voltage side power circuit includes a first AC-DC rectifier circuit, a first DC-AC inverter circuit, a high-voltage side detection circuit, a high-voltage side control circuit, and a high-voltage side drive circuit. The first AC-DC rectifier circuit is configured to convert the first alternating current to a third direct current. The first DC-AC inverter circuit is configured to convert the third direct current to the second alternating current. The high-voltage side detection circuit is configured to detect whether a voltage in the first AC-DC rectifier circuit and the first DC-AC inverter circuit meets a preset voltage range and whether a current meets a preset current range. The high-voltage side control circuit is configured to control conversion from an alternating current to a direct current in the first AC-DC rectifier circuit and conversion from a direct current to an alternating current in the first DC-AC inverter circuit. The high-voltage side drive circuit is configured to drive the first AC-DC rectifier circuit and the first DC-AC inverter circuit, so that the first AC-DC rectifier circuit and the first DC-AC inverter circuit work normally.

In this implementation, the high-voltage side power circuit includes the first AC-DC rectifier circuit, the first DC-AC inverter circuit, the high-voltage side detection circuit, the high-voltage side control circuit, and the high-voltage side drive circuit, to convert an input medium-voltage alternating current to an alternating current at a higher frequency.

With reference to the first aspect, in a possible implementation, the low-voltage side power circuit includes a second AC-DC rectifier circuit, a low-voltage side detection circuit, a low-voltage side control circuit, a low-voltage side communication circuit, and a low-voltage side fan circuit. The second AC-DC rectifier circuit is configured to convert the third alternating current to the first direct current. The low-voltage side detection circuit is configured to detect whether a voltage in the second AC-DC rectifier circuit meets a preset voltage range and whether a current meets a preset current range. The low-voltage side control circuit is configured to control conversion from an alternating current to a direct current in the second AC-DC rectifier circuit. The low-voltage side communication circuit is configured to transfer a running state of the solid-state transformer. The low-voltage side fan circuit is configured to perform heat dissipation on the solid-state transformer.

In this implementation, the low-voltage side power circuit includes the second AC-DC rectifier circuit, the low-voltage side detection circuit, the low-voltage side control circuit, the low-voltage side communication circuit, and the low-voltage side fan circuit, to convert an alternating current to a direct current output.

With reference to the first aspect, in a possible implementation, if the output end that is in the solid-state transformer and that is connected to the load is connected to an alternating current load, the solid-state transformer further includes a second DC-AC inverter circuit. The second DC-AC inverter circuit is located between output ends of N low-voltage side power circuits that are in the first phase circuit and that have a one-to-one correspondence with the N power units and the output end that is in the solid-state transformer and that is connected to the load. The second DC-AC inverter circuit is configured to convert the first direct current to a low-voltage alternating current. The low-voltage alternating current is used to supply power to the alternating current load.

According to a second aspect, this application provides a data center. The data center includes a physical server, a communication device, and the solid-state transformer according to any one of the first aspect or the possible implementations of the first aspect. The physical server includes a processor, a hard disk, and a system bus. The communication device includes a router and a switch.

According to a third aspect, this application provides an electronic device. The electronic device includes the solid-state transformer according to any one of the first aspect or the possible implementations of the first aspect.

According to a fourth aspect, this application provides a power supply. The power supply includes the solid-state transformer according to any one of the first aspect or the possible implementations of the first aspect.

With reference to the fourth aspect, in a possible implementation, the power supply is applied to a charging pile.

### BRIEF DESCRIPTION OF DRAWINGS

FIG. 1 is a schematic diagram of a basic structure of a solid-state transformer according to an embodiment of this application;
FIG. 2 is a schematic diagram of a structure of a power unit according to an embodiment of this application;
FIG. 3 is a schematic diagram of a structure for supplying power to a low-voltage side auxiliary power supply circuit in the conventional technology according to an embodiment of this application;
FIG. 4 is a schematic diagram of a structure of a solid-state transformer according to another embodiment of this application;
FIG. 5 is a schematic diagram of a structure of a single power unit according to another embodiment of this application;
FIG. 6 is a schematic diagram of a structure of a solid-state transformer in which each phase circuit of a three-phase medium-voltage alternating current input circuit independently supplies power to a low-voltage side auxiliary power supply circuit according to an embodiment of this application;
FIG. 7 is a schematic diagram of a structure of a solid-state transformer according to still another embodiment of this application;
FIG. 8 is a schematic diagram of a structure of a solid-state transformer according to still another embodiment of this application;
FIG. 9A, FIG. 9B, FIG. 9C, and FIG. 9D are a schematic diagram of a structure of a solid-state transformer according to still another embodiment of this application; and
FIG. 10A, FIG. 10B, FIG. 10C, and FIG. 10D are a schematic diagram of a structure of a solid-state transformer according to still another embodiment of this application.

### DESCRIPTION OF EMBODIMENTS

The following describes implementations of embodiments of this application in detail with reference to accompanying drawings.

In the field of power electronic technologies, a transformer is an important component of a power system. The transformer can implement voltage level conversion (for example, conversion from a high-voltage alternating current to a low-voltage alternating current, or conversion from a low-voltage alternating current to a high-voltage alternating current) and electrical isolation (for example, high-voltage electrical isolation). However, conventional transformers have significant disadvantages, for example, have a large size and a heavy weight, cannot maintain a stable output voltage when an input voltage is unstable, and do not have a capability to improve output power quality.

To resolve the disadvantages of conventional transformers, a solid-state transformer (solid-state transformer, SST) is usually used for voltage level conversion. The SST is a medium-voltage to low-voltage power conversion system that uses high-frequency isolation, and uses the power electronic technology for power conversion and energy transfer. The SST has many advantages, for example, has a small size and a stable output voltage, and improves a power factor and a current harmonic indicator at an input side. Therefore, the solid-state transformer has great development potential.

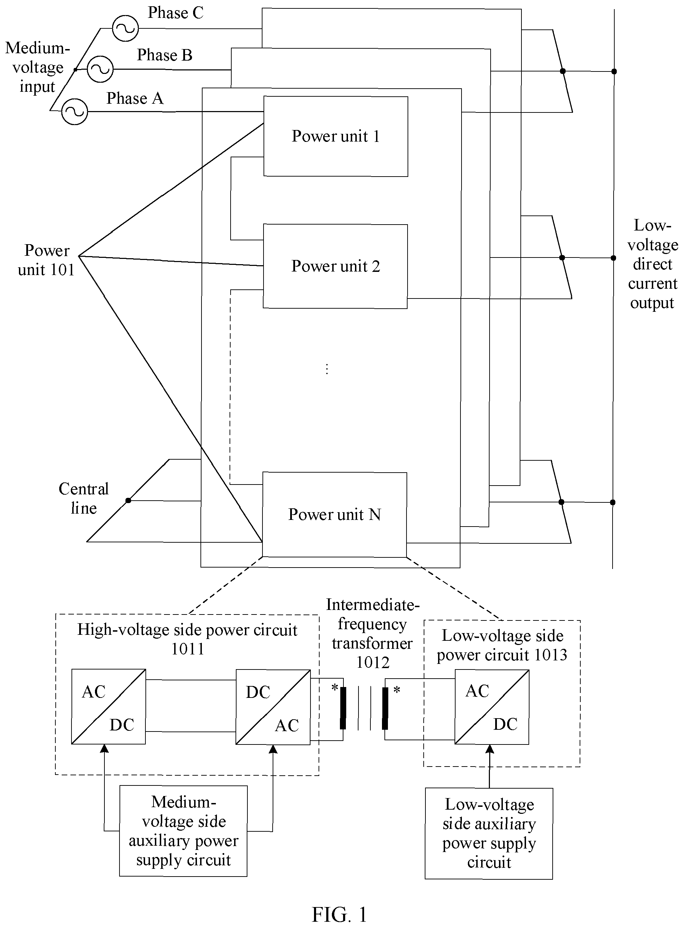

FIG. 1 is a schematic diagram of a basic structure of a solid-state transformer according to an embodiment of this application. As shown in FIG. 1, in an example in which an input of the solid-state transformer is a three-phase medium-voltage alternating current (namely a phase A, a phase B, and a phase C in FIG. 1), and an output is a low-voltage direct current, each phase circuit of a three-phase medium-voltage alternating current input circuit includes N power units 101 (namely, a power unit 1, a power unit 2, ..., and a power unit N in FIG. 1) connected in series at a medium-voltage side and connected in parallel at a low-voltage side.

Each power unit 101 includes a high-voltage side power circuit 1011, an intermediate-frequency transformer 1012, and a low-voltage side power circuit 1013. As shown in FIG. 1, the high-voltage side power circuit 1011 includes an alternating current (alternating current, AC)-direct current (direct current, DC) rectifier circuit and a DC-AC inverter circuit. A medium-voltage side auxiliary power supply circuit supplies power to the AC-DC rectifier circuit and the DC-AC inverter circuit. The intermediate-frequency transformer 1012 is located between the high-voltage side power circuit 1011 and the low-voltage side power circuit 1013, and is configured to electrically isolate the high-voltage side power circuit from the low-voltage side power circuit. The low-voltage side power circuit 1013 includes an AC-DC rectifier circuit. The low-voltage side auxiliary power supply circuit is configured to supply power to the AC-DC rectifier circuit.

It should be noted that the medium-voltage side auxiliary power supply circuit is in a distributed architecture, and is distributed in each power unit 101, to supply power to the high-voltage side power circuit in each power unit 101; and the low-voltage side auxiliary power supply circuit is in a centralized architecture, and supplies power to the low-voltage side power circuits of all power units 101 in the solid-state transformer.

Optionally, the structure of the solid-state transformer shown in FIG. 1 is merely an example.

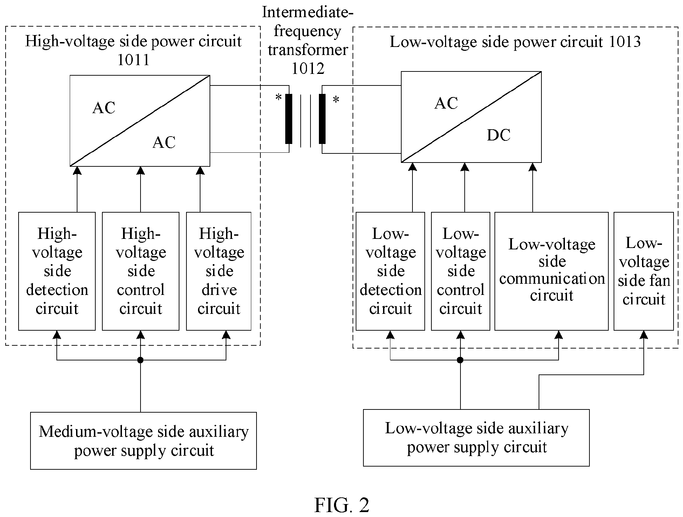

Further, the high-voltage side power circuit 1011 further includes a high-voltage side detection circuit, a high-voltage side control circuit, and a high-voltage side drive circuit. The low-voltage side power circuit 1013 further includes a low-voltage side detection circuit, a low-voltage side control circuit, a low-voltage side communication circuit, and a low-voltage side fan circuit. The specific structure thereof is shown in FIG. 2. The medium-voltage side auxiliary power supply circuit is also configured to supply power to the high-voltage side detection circuit, the high-voltage side control circuit, and the high-voltage side drive circuit. The low-voltage side auxiliary power supply circuit is also configured to supply power to the low-voltage side detection circuit, the low-voltage side control circuit, the low-voltage side communication circuit, and the low-voltage side fan circuit.

An AC-AC circuit in the high-voltage side power circuit 1011 shown in FIG. 2 is equivalent to the AC-DC rectifier circuit and the DC-AC inverter circuit shown in FIG. 1. The high-voltage side detection circuit is configured to detect whether a voltage in the AC-AC circuit in the high-voltage side power circuit 1011 meets a preset voltage range and whether a current meets a preset current range. The high-voltage side control circuit is configured to control conversion from an alternating current to an alternating current in the AC-AC circuit in the high-voltage side power circuit 1011. The high-voltage side drive circuit is configured to drive the AC-AC circuit in the high-voltage side power circuit 1011, so that the AC-AC circuit works normally. The low-voltage side detection circuit is configured to detect whether a voltage in the AC-DC rectifier circuit in the low-voltage side power circuit 1013 meets a preset voltage range and whether a current meets a preset current range. The low-voltage side control circuit is configured to control conversion from an alternating current to a direct current in the AC-DC rectifier circuit in the low-voltage side power circuit 1013. The low-voltage side communication circuit is configured to transfer a running state of the solid-state transformer. The low-voltage side fan circuit is configured to perform heat dissipation on the solid-state transformer.

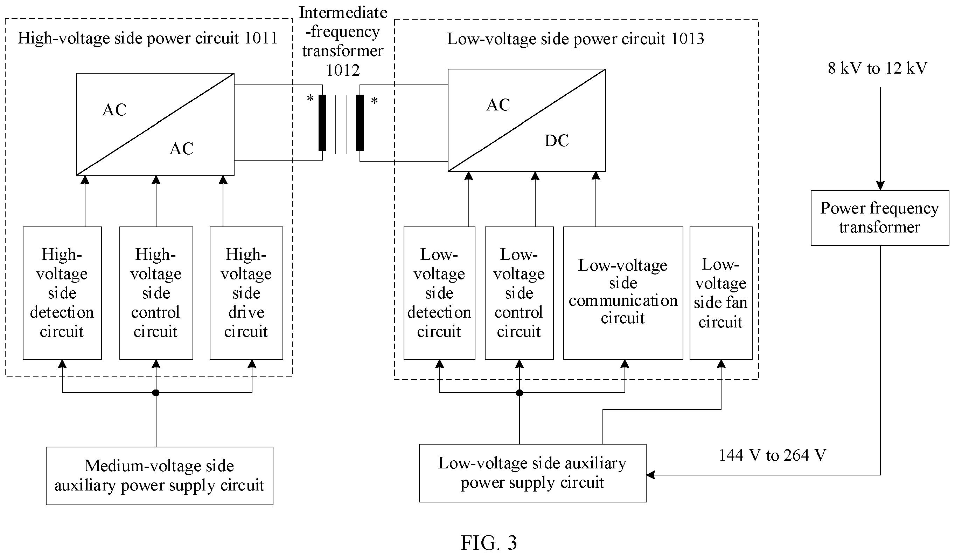

In a current conventional technology, the low-voltage side auxiliary power supply circuit is powered by a power frequency transformer. Based on the schematic diagram of the structure of the power unit shown in FIG. 2, FIG. 3 is a schematic diagram of a structure for supplying power to a low-voltage side auxiliary power supply circuit in the conventional technology according to an embodiment of this application. As shown in FIG. 3, the low-voltage side auxiliary power supply circuit is powered by an external power frequency transformer (also referred to as a medium-voltage transformer) that converts an input high-voltage alternating current of 8 kilovolts (kV) to 12 kV to a low-voltage alternating current of 144 volts (V) to 264 V

For example, the power frequency transformer converts a 10 kV medium-voltage alternating current to a 220 V alternating current, and then supplies power to the low-voltage side auxiliary power supply circuit. Optionally, the low-voltage side auxiliary power supply circuit may be directly powered by using a 220 V alternating current; or the low-voltage side auxiliary power supply circuit may be powered by first using anAC-DC rectifier circuit to convert the 220 V alternating current to a 220 V direct current.

However, the power frequency transformer is costly and heavy, and consequently use costs of the solid-state transformer are high. In addition, 10 kV medium-voltage insulation is required. Therefore, how to reduce the costs of the solid-state transformer becomes a technical problem to be urgently resolved.

In view of this, this application provides a solid-state transformer, so that costs of the solid-state transformer can be reduced, and reliability of power supply to a low-voltage side auxiliary power supply can be improved.

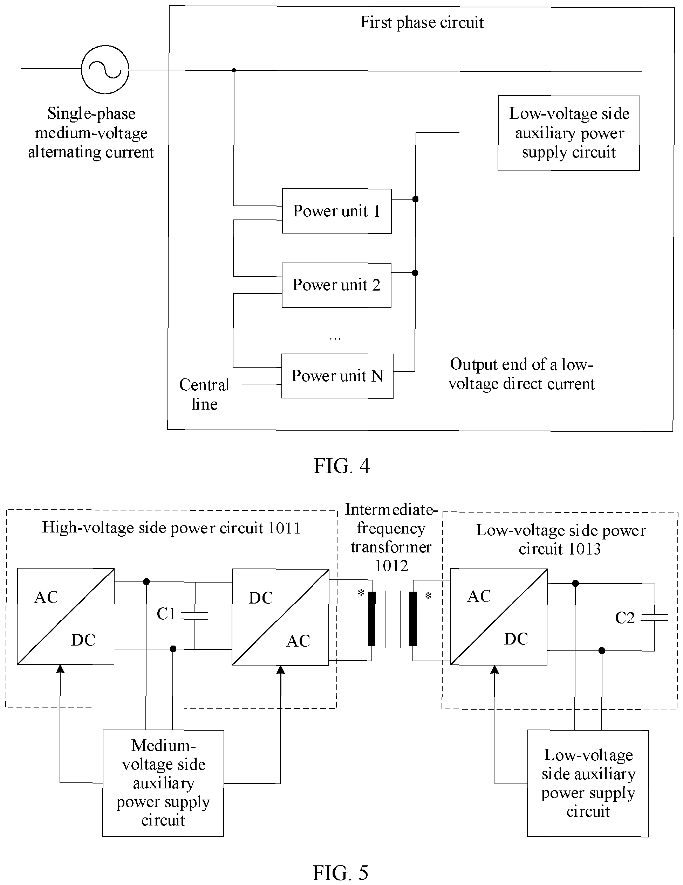

Based on the schematic diagram of the basic structure of the solid-state transformer in FIG. 1, FIG. 4 is a schematic diagram of a structure of a solid-state transformer according to another embodiment of this application. As shown in FIG. 4, the solid-state transformer includes a first phase circuit. An input end of the first phase circuit is connected to a single-phase medium-voltage alternating current, and an output end is connected to an output end of a low-voltage direct current. The first phase circuit includes N power units (namely, a power unit 1, a power unit 2, ..., and a power unit N in FIG. 4), and N is an integer greater than or equal to 1.

Each of the N power units includes an input end and an output end. Input ends of the N power units included in the first phase circuit are connected in series and are connected to the single-phase medium-voltage alternating current, and output ends of the N power units included in the first phase circuit are connected in parallel and are connected to the output end of the low-voltage direct current.

The solid-state transformer further includes a low-voltage side auxiliary power supply circuit. The low-voltage side auxiliary power supply circuit is connected to the output end of the low-voltage direct current. First direct currents output from the output ends of the N power units are used to supply power to the low-voltage side auxiliary power supply circuit, and the first direct current is the low-voltage direct current.

Optionally, the low-voltage side auxiliary power supply circuit is in a centralized architecture.

Understandably, the low-voltage side auxiliary power supply circuit supplies power to at least a part of functional circuits in a low-voltage side power circuit in each power unit, and the at least a part of functional circuits include, but not limited to, a low-voltage side detection circuit, a low-voltage side control circuit, a low-voltage side communication circuit, and a low-voltage side fan circuit.

Optionally, each of the N power units includes a high-voltage side power circuit, an intermediate-frequency transformer, and a low-voltage side power circuit that are sequentially connected. The input end of each power unit is an input end of the high-voltage side power circuit, and the output end is an output end of the low-voltage side power circuit.

It should be noted that, a first direct current output by the low-voltage side power circuit in the solid-state transformer is generally hundreds of volts, may be directly used to supply power to the low-voltage side auxiliary power supply circuit, and may further be output to the output end of the low-voltage direct current, to be connected to a load and supply power to the load.

Optionally, starting from an input point of the single-phase medium-voltage alternating current of the first phase circuit, the N power units are sequentially represented as the power unit 1, the power unit 2, ..., and the power unit N. That is, a power unit closest to a medium-voltage alternating current input is the power unit 1, and the subsequent power units are sequentially sorted. The medium-voltage alternating current is an alternating current with a voltage value greater than or equal to a first threshold, and the low-voltage direct current is a direct current with a voltage value less than the first threshold.
Optionally, the first threshold is 1 kV
Optionally, the medium-voltage alternating current is 10 kV

Optionally, an output of the solid-state transformer may be the low-voltage direct current; or based on a requirement, the output low-voltage direct current is connected to a DC-AC inverter circuit, to finally output a low-voltage alternating current.

Understandably, N high-voltage side power circuits that are in the first phase circuit and that have a one-to-one correspondence with the N power units perform voltage division on the single-phase medium-voltage alternating current. The high-voltage side power circuit is specifically configured to: input a first alternating current at a first frequency, and output a second alternating current after converting the first alternating current to the second alternating current at a second frequency, where the second frequency is greater than the first frequency. That is, the high-voltage side power circuit converts the input medium-voltage alternating current to an alternating current at a higher frequency, and outputs the alternating current at the higher frequency to the intermediate-frequency transformer. The intermediate-frequency transformer is specifically configured to: input the second alternating current, and convert the second alternating current to a third alternating current at the second frequency. The intermediate-frequency transformer is further configured to electrically isolate the high-voltage side power circuit from the low-voltage side power circuit. The low-voltage side power circuit is specifically configured to: input the third alternating current, convert the third alternating current to the first direct current, and output the first direct current.

The solid-state transformer further includes a second phase circuit and a third phase circuit. Output ends of the first phase circuit, the second phase circuit, and the third phase circuit are connected in parallel and are connected to the output end of the low-voltage direct current. The first phase circuit, the second phase circuit, and the third phase circuit have a same circuit structure. The first phase circuit is any one of the first phase circuit, the second phase circuit, and the third phase circuit.

As an optional implementation, the first phase circuit includes a power unit X. When the solid-state transformer is started, a first direct current output by the power unit X in the first phase circuit is used to supply power to the low-voltage side auxiliary power supply circuit.

The power unit X is any one of the N power units.

Understandably, when the solid-state transformer is started, the first direct current output by the power unit X in the first phase circuit is used to supply power to the low-voltage side auxiliary power supply circuit. The first phase circuit is any one of the first phase circuit, the second phase circuit, and the third phase circuit. If the solid-state transformer includes a multi-phase circuit, first direct currents output by power units X at identical positions in all phase circuits of the multi-phase circuit are also used to supply power to the low-voltage side auxiliary power supply circuit.

That is, each phase uses the power unit X. In an aspect, the power unit X is used in each phase circuit, so that in startup control of the solid-state transformer, a control method is simple and easy to implement. In another aspect, the first direct current output by the power unit X in each phase circuit may separately and independently supply power to the low-voltage side auxiliary power supply circuit and back up each other, so that reliability of power supply to the low-voltage side auxiliary power supply circuit can be improved.

Optionally, the solid-state transformer further includes a medium-voltage side auxiliary power supply circuit. The medium-voltage side auxiliary power supply circuit is in a distributed architecture, and is distributed in each power unit in each phase circuit, to supply power to the high-voltage side power circuit in each power unit. Specifically, as shown in FIG. 5, each power unit includes a high-voltage side power circuit 1011, an intermediate-frequency transformer 1012, and a low-voltage side power circuit 1013. The high-voltage side power circuit 1011 includes an AC-DC rectifier circuit and a DC-AC inverter circuit. The medium-voltage side auxiliary power supply circuit supplies power to the AC-DC rectifier circuit and the DC-AC inverter circuit in the high-voltage side power circuit 1011, and a direct current output by the AC-DC rectifier circuit is further used to supply power to the medium-voltage side auxiliary power supply circuit. The high-voltage side power circuit 1011 further includes a capacitor C1. The capacitor C1 is configured to use charge and discharge characteristics of the capacitor C1 to change a rectified pulsating direct current voltage into a relatively stable direct current voltage, that is, to stabilize a voltage. The low-voltage side power circuit 1013 includes an AC-DC rectifier circuit. A low-voltage side auxiliary power supply circuit is configured to supply power to the AC-DC rectifier circuit in the low-voltage side power circuit 1013, and a low-voltage direct current output by the AC-DC rectifier circuit is further used to supply power to the low-voltage side auxiliary power supply circuit. The low-voltage side power circuit 1013 further includes a capacitor C2. The capacitor C2 is configured to stabilize a voltage.

The intermediate-frequency transformer 1012 is located between the high-voltage side power circuit 1011 and the low-voltage side power circuit 1013, and is configured to electrically isolate the high-voltage side power circuit from the low-voltage side power circuit.

Understandably, the high-voltage side power circuit 1011 further includes a high-voltage side detection circuit, a high-voltage side control circuit, a high-voltage side drive circuit, and the like. The high-voltage side detection circuit is mainly configured to detect whether a voltage in the AC-DC rectifier circuit and the DC-AC inverter circuit in the high-voltage side power circuit 1011 meets a preset voltage range and whether a current meets a preset current range. The high-voltage side control circuit is configured to control conversion from an alternating current to a direct current in the AC-DC rectifier circuit and conversion from a direct current to an alternating current in the DC-AC inverter circuit in the high-voltage side power circuit 1011. The high-voltage side drive circuit is configured to drive the AC-DC rectifier circuit and the DC-AC inverter circuit in the high-voltage side power circuit 1011, so that the AC-DC rectifier circuit and the DC-AC inverter circuit work normally. The medium-voltage side auxiliary power supply circuit is also configured to supply power to the high-voltage side detection circuit, the high-voltage side control circuit, and the high-voltage side drive circuit.

The low-voltage side power circuit 1013 further includes a low-voltage side detection circuit, a low-voltage side control circuit, a low-voltage side communication circuit, and a low-voltage side fan circuit. Voltages required for working of these sub-circuits are generally small, for example, tens of volts. Therefore, the voltages required for the working of these sub-circuits may be output through the low-voltage side auxiliary power supply circuit. Specifically, the low-voltage side detection circuit is configured to detect whether a voltage in the AC-DC rectifier circuit in the low-voltage side power circuit 1013 meets a preset voltage range and whether a current meets a preset current range. The low-voltage side control circuit is configured to control conversion from an alternating current to a direct current in the AC-DC rectifier circuit in the low-voltage side power circuit 1013. The low-voltage side communication circuit is configured to transfer a running state of the solid-state transformer. The low-voltage side fan circuit is configured to perform heat dissipation on the solid-state transformer, to improve performance of the solid-state transformer. The low-voltage side auxiliary power supply circuit is also configured to supply power to the low-voltage side detection circuit, the low-voltage side control circuit, the low-voltage side communication circuit, and the low-voltage side fan circuit.

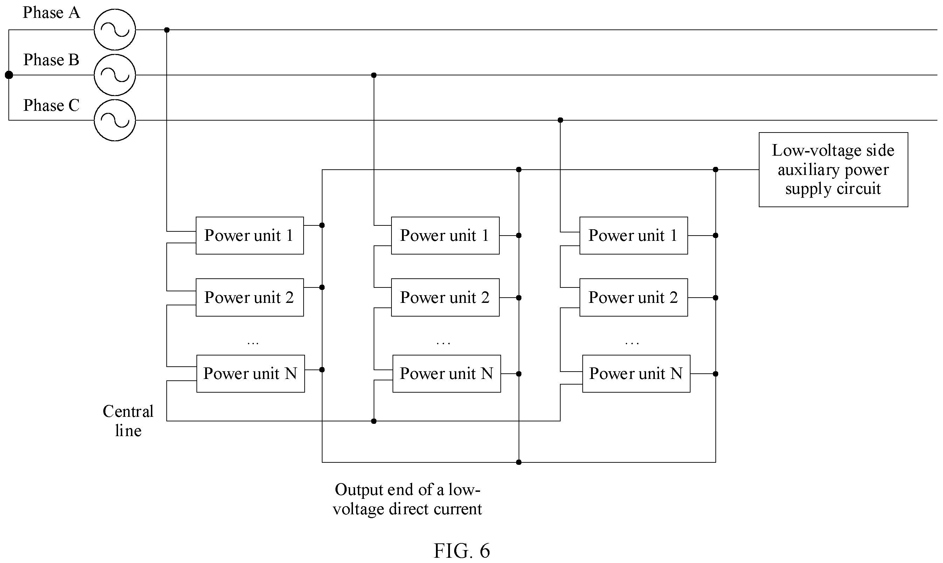

For example, FIG. 6 is a schematic diagram of a structure of a solid-state transformer in which each phase circuit of a three-phase medium-voltage alternating current input circuit independently supplies power to a low-voltage side auxiliary power supply circuit according to an embodiment of this application. As shown in FIG. 6, a three-phase medium-voltage alternating current input separately includes a phase A, a phase B, and a phase C. Each phase circuit of phase-A, phase-B, and phase-C input circuits includes N power units that are sequentially represented as a power unit 1, a power unit 2, ..., and a power unit N starting from a power unit closest to a medium-voltage alternating current input. An output end of each phase circuit is connected to output ends of the low-voltage side auxiliary power supply circuit and a low-voltage direct current. The output end of the low-voltage direct current is generally connected to a load to supply power to the load, or is connected to a DC-AC inverter circuit, to convert the low-voltage direct current to a low-voltage alternating current output to meet a use requirement.

Understandably, it can be seen from FIG. 6 that, in a working process of the solid-state transformer, a low-voltage direct current output by any one of N power units in each phase circuit of a three-phase input circuit including phases A, B, and C may supply power to the low-voltage side auxiliary power supply circuit, and a three-phase low-voltage direct current generated by the three-phase medium-voltage alternating current including phases A, B, and C may separately and independently supply power to the low-voltage side auxiliary power supply circuit and back up each other. In other words, if a problem occurs in a low-voltage direct current output of any phase in the three-phase medium-voltage alternating current including phases A, B, and C, a low-voltage direct current output of another phase may still supply power to the low-voltage side auxiliary power supply circuit, so that reliability of power supply to the low-voltage side auxiliary power supply can be improved.

In another optional implementation, when the solid-state transformer is just started, a low-voltage side direct current voltage may be low. In this case, if the load is connected to supply power to the load, the load voltage is excessively low, and the load cannot be normally started or the load is damaged. Therefore, to prevent a low load voltage caused by a low low-voltage side direct current when the load is started, a switch unit is used to control power supply to the load.

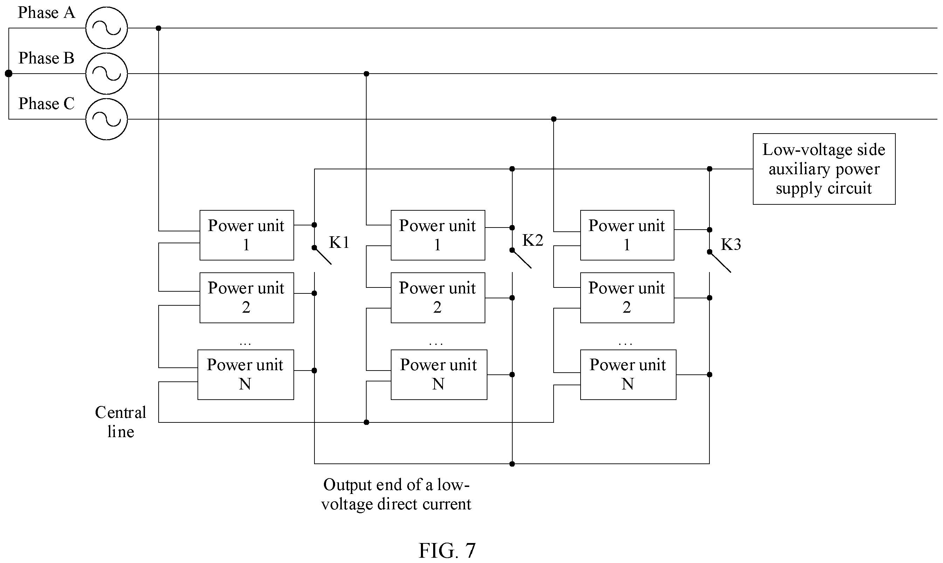

FIG. 7 is a schematic diagram of a structure of a solid-state transformer according to still another embodiment of this application. In an example in which an input is a three-phase medium-voltage alternating current, as shown in FIG. 7, a three-phase medium-voltage alternating current input separately includes a phase A, a phase B, and a phase C. Each phase circuit of phase-A, phase-B, and phase-C input circuits includes N power units that are sequentially represented as a power unit 1, a power unit 2, ..., and a power unit N starting from a power unit closest to a medium-voltage alternating current input. Each phase circuit of a three-phase medium-voltage alternating current input circuit including phases A, B, and C further includes a switch unit, for example, a switch unit K1, a switch unit K2, or a switch unit K3 shown in FIG. 7. The switch unit K1, the switch unit K2, or the switch unit K3 each is disposed behind the power unit 1 in each phase circuit.

The switch unit is connected between a power unit X and an output end that is in a solid-state transformer and that is connected to a load, and is configured to: when the solid-state transformer is started, disconnect the power unit X from the output end (an output end of a low-voltage direct current shown in FIG. 7) that is in the solid-state transformer and that is connected to the load; and when a voltage in the solid-state transformer reaches a preset stable voltage value, connect the power unit X to the output end that is in the solid-state transformer and that is connected to the load. The switch unit in each phase circuit of the three-phase medium-voltage alternating current input circuit including phases A, B, and C is turned on when the voltage in the solid-state transformer reaches the preset stable voltage value.

Understandably, as shown in FIG. 7, when the solid-state transformer is just started, the switch unit in each phase circuit of the three-phase medium-voltage alternating current input circuit including phases A, B, and C is turned off, that is, the switch unit K1, the switch unit K2, and the switch unit K3 are turned off. In this case, the power unit 1 in each phase circuit of the three-phase input circuit including phases A, B, and C is disconnected from the output end that is connected to the load and that is of the low-voltage direct current. The low-voltage direct current output by the power unit 1 in each phase circuit is used to supply power to a low-voltage side auxiliary power supply circuit. When the voltage in the solid-state transformer reaches the preset stable voltage value, that is, the load voltage is normal, the switch unit K1, the switch unit K2, and the switch unit K3 are turned on.

Further, the switch unit K1, the switch unit K2, and the switch unit K3 are turned on, and all power units in each phase circuit of the three-phase input circuit including phases A, B, and C output first direct currents, to supply power to the low-voltage side auxiliary power supply circuit, and also supply power to the load connected to the output end of the low-voltage direct current. Compared with the conventional technology, no additional power frequency transformer and 10-kilovolt medium-voltage insulation are required, costs are low, and reliability of power supply to the low-voltage side auxiliary power supply circuit is high.

Optionally, the switch unit includes a relay or a semiconductor power switch.

Optionally, the switch unit K1, the switch unit K2, and the switch unit K3 shown in FIG. 7 are all disposed behind the power unit 1 in each phase circuit. This is merely an example, and this example is simple and easy to implement in terms of control of the solid-state transformer. A specific position of the switch unit is not limited in this application.

As another optional implementation, based on the foregoing embodiment, the solid-state transformer further includes a standby energy storage apparatus. The standby energy storage apparatus is connected to the low-voltage side auxiliary power supply circuit and is configured to supply power to the low-voltage side auxiliary power supply circuit.

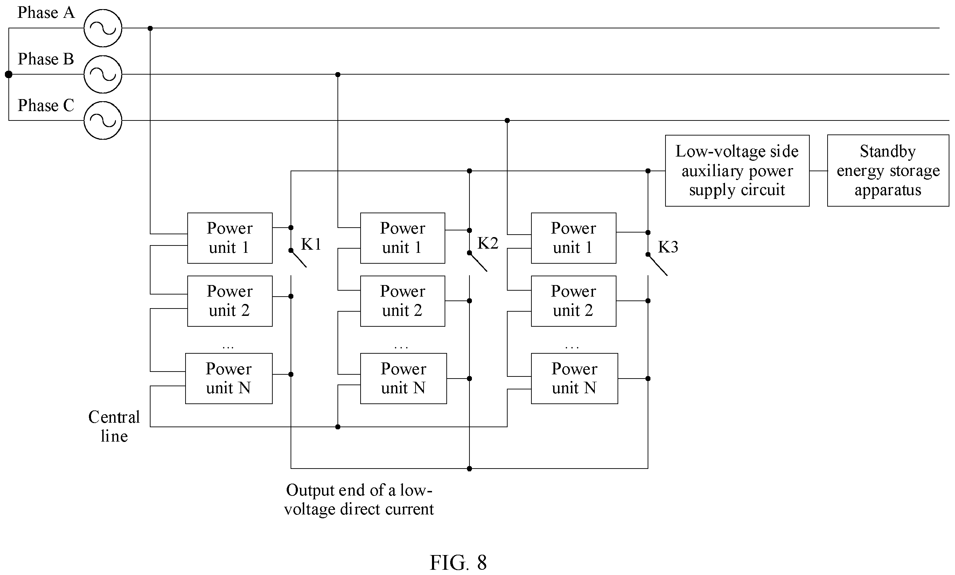

For example, in an example in which an input is a three-phase medium-voltage alternating current, a schematic diagram of a specific structure thereof is shown in FIG. 8. A three-phase medium-voltage alternating current input separately includes a phase A, a phase B, and a phase C. Each phase circuit of phase-A, phase-B, and phase-C input circuits includes N power units that are sequentially represented as a power unit 1, a power unit 2, ..., and a power unit N starting from a power unit closest to a medium-voltage alternating current input. Each phase circuit of a three-phase medium-voltage alternating current input circuit including phases A, B, and C further includes a switch unit, for example, a switch unit K1, a switch unit K2, or a switch unit K3 shown in FIG. 8. The switch unit K1, the switch unit K2, or the switch unit K3 each is disposed behind the power unit 1 in each phase circuit. The standby energy storage apparatus is connected to the low-voltage side auxiliary power supply circuit.

It should be noted that functions of the switch unit K1, the switch unit K2, and the switch unit K3 are as described in the foregoing embodiment. Details are not described herein again.

The standby energy storage apparatus is configured to store electric energy when the solid-state transformer works normally. When all power units in phase circuits of the three-phase input circuit including phases A, B, and C in the solid-state transformer encounter a problem at the same time, that is, three low-voltage direct current outputs cannot supply power to the low-voltage side auxiliary power supply circuit, the standby energy storage apparatus may be configured to supply power to the low-voltage side auxiliary power supply circuit in an emergency; and it may be determined that the solid-state transformer is faulty, and a fault signal is sent out.

After the standby energy storage apparatus is added to the solid-state transformer, a fault of the solid-state transformer caused when the three low-voltage direct current outputs supplying power to the low-voltage side auxiliary power supply circuit encounter a problem at the same time may be prevented, the fault of the solid-state transformer is determined in time, and the fault signal is sent out, so that related personnel can discover and handle the problem in time, and then reliability of power supply to the low-voltage side auxiliary power supply circuit is improved.

Optionally, the standby energy storage apparatus includes a battery, a capacitor, or the like.

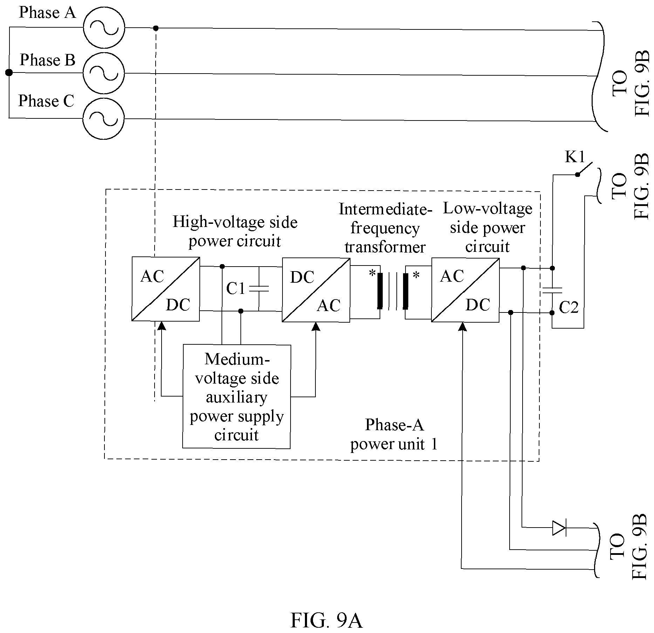

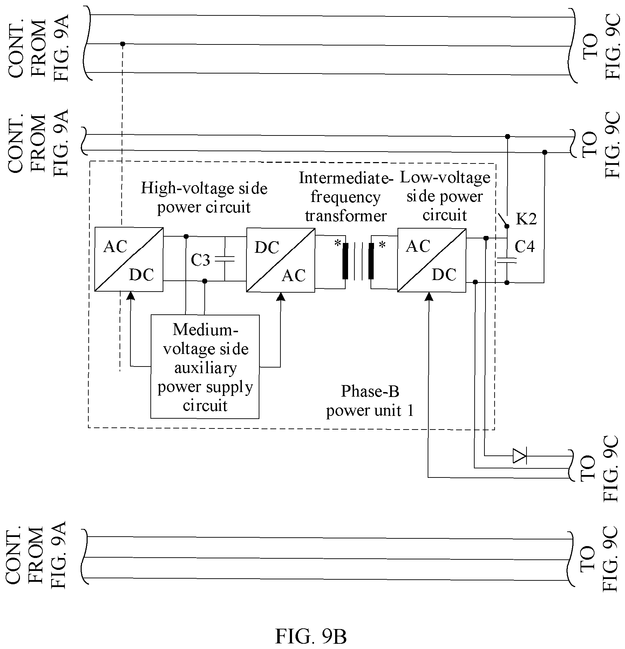

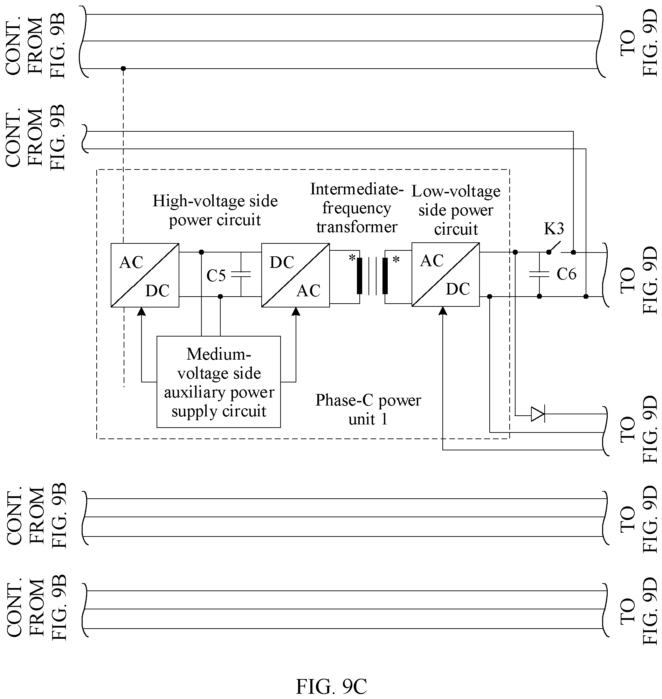

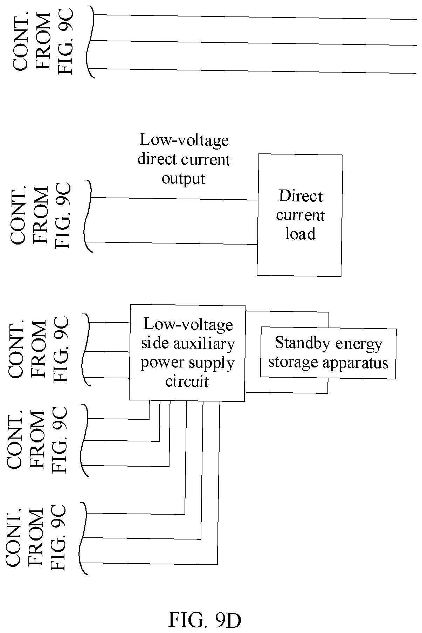

As an example, FIG. 9A, FIG. 9B, FIG. 9C, and FIG. 9D are a schematic diagram of a structure of a solid-state transformer according to still another embodiment of this application. In an example in which an input is a three-phase medium-voltage alternating current, each phase circuit of a three-phase medium-voltage alternating current input circuit only includes a power unit 1, and an output is a low-voltage direct current, as shown in FIG. 9A, FIG. 9B, FIG. 9C, and FIG. 9D, a phase-A power unit 1 in the solid-state transformer includes a high-voltage side power circuit, an intermediate-frequency transformer, and a low-voltage side power circuit. The high-voltage side power circuit includes an AC-DC rectifier circuit and a DC-AC inverter circuit. A medium-voltage side auxiliary power supply circuit supplies power to the AC-DC rectifier circuit and the DC-AC inverter circuit in the high-voltage side power circuit, and a direct current output by the AC-DC rectifier circuit is further used to supply power to the medium-voltage side auxiliary power supply circuit. The high-voltage side power circuit further includes a capacitor C1. The capacitor C1 is configured to use charge and discharge characteristics of the capacitor C1 to change a rectified pulsating direct current voltage into a relatively stable direct current voltage, that is, to stabilize a voltage. The low-voltage side power circuit includes an AC-DC rectifier circuit and a capacitor C2, and the capacitor C2 is configured to stabilize a voltage. A phase-B power unit 1 includes a high-voltage side power circuit, an intermediate-frequency transformer, and a low-voltage side power circuit. The high-voltage side power circuit includes an AC-DC rectifier circuit and a DC-AC inverter circuit. The medium-voltage side auxiliary power supply circuit supplies power to the AC-DC rectifier circuit and the DC-AC inverter circuit in the high-voltage side power circuit, and a direct current output by the AC-DC rectifier circuit is further used to supply power to the medium-voltage side auxiliary power supply circuit. The high-voltage side power circuit further includes a capacitor C3. The capacitor C3 is configured to use charge and discharge characteristics of the capacitor C3 to change a rectified pulsating direct current voltage into a relatively stable direct current voltage, that is, to stabilize a voltage. The low-voltage side power circuit includes an AC-DC rectifier circuit and a capacitor C4, and the capacitor C4 is configured to stabilize a voltage. A phase-C power unit 1 includes a high-voltage side power circuit, an intermediate-frequency transformer, and a low-voltage side power circuit. The high-voltage side power circuit includes an AC-DC rectifier circuit and a DC-AC inverter circuit. The medium-voltage side auxiliary power supply circuit supplies power to the AC-DC rectifier circuit and the DC-AC inverter circuit in the high-voltage side power circuit, and a direct current output by the AC-DC rectifier circuit is further used to supply power to the medium-voltage side auxiliary power supply circuit. The high-voltage side power circuit further includes a capacitor C5. The capacitor C5 is configured to use charge and discharge characteristics of the capacitor C5 to change a rectified pulsating direct current voltage into a relatively stable direct current voltage, that is, to stabilize a voltage. The low-voltage side power circuit includes an AC-DC rectifier circuit and a capacitor C6, and the capacitor C6 is configured to stabilize a voltage.

A low-voltage direct current output side in each power unit 1 of the phase-A power unit 1, the phase-B power unit 1, and the phase-C power unit 1 is connected to the low-voltage side auxiliary power supply circuit through a diode, to supply power to the low-voltage side auxiliary power supply circuit.

The low-voltage side auxiliary power supply circuit is further configured to supply power to the low-voltage side power circuit in the phase-A power unit 1, the low-voltage side power circuit in the phase-B power unit 1, and the low-voltage side power circuit in the phase-C power unit 1.

Each phase circuit of the three-phase medium-voltage alternating current input circuit further includes a switch unit, for example, a switch unit K1, a switch unit K2, or a switch unit K3, configured to: when the solid-state transformer is started, disconnect the phase-A power unit 1, the phase-B power unit 1, and the phase-C power unit 1 from an output end that is in the solid-state transformer and that is connected to a direct current load; and when a voltage in the solid-state transformer reaches a preset stable voltage value, connect the phase-A power unit 1, the phase-B power unit 1, and the phase-C power unit 1 to the output end that is in the solid-state transformer and that is connected to the direct current load. That is, when the voltage in the solid-state transformer reaches the preset stable voltage value, the switch unit K1, the switch unit K2, and the switch unit K3 are turned on, to prevent a low load voltage caused by a low low-voltage side direct current output when the solid-state transformer is started.

The low-voltage side auxiliary power supply circuit is further connected to a standby energy storage apparatus that is configured to store electric energy when the solid-state transformer works normally. When the power units 1 in all phase circuits of the three-phase input circuit including phases A, B, and C in the solid-state transformer encounter a problem at the same time, that is, three low-voltage direct current outputs cannot supply power to the low-voltage side auxiliary power supply circuit, the standby energy storage apparatus may be configured to supply power to the low-voltage side auxiliary power supply circuit in an emergency; and it may be determined that the solid-state transformer is faulty, and a fault signal is sent out, so that related personnel can discover and handle the problem in time, and then reliability of power supply to the low-voltage side auxiliary power supply circuit is improved.

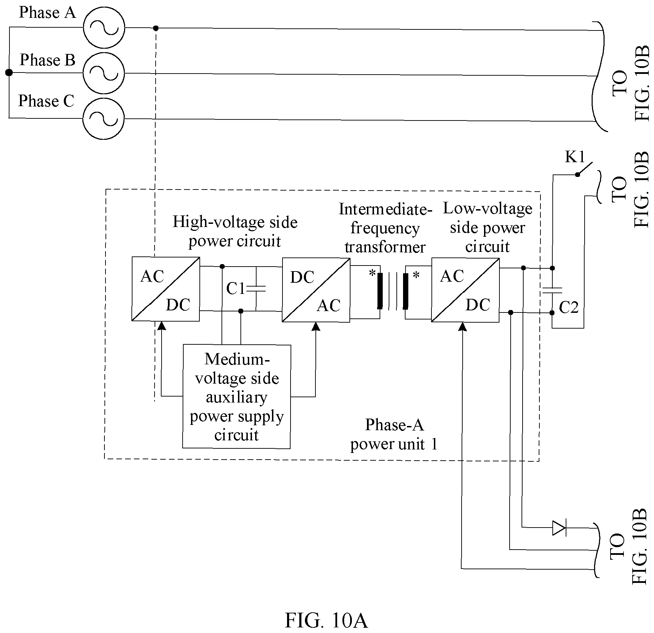

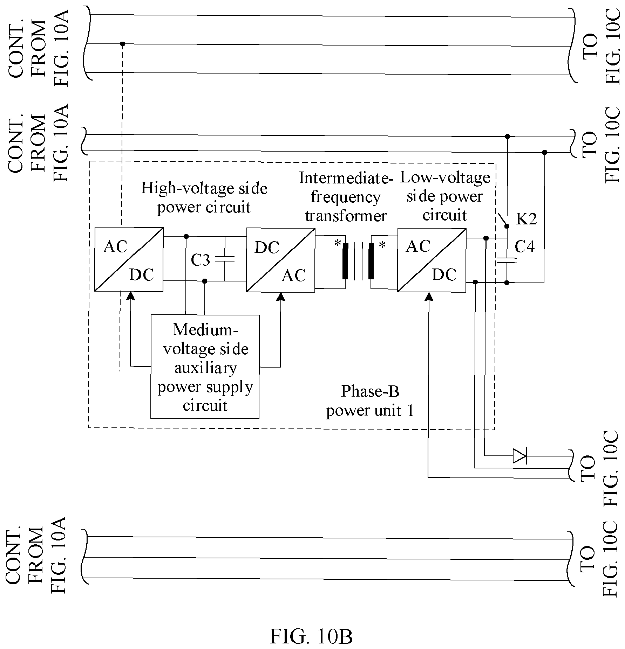

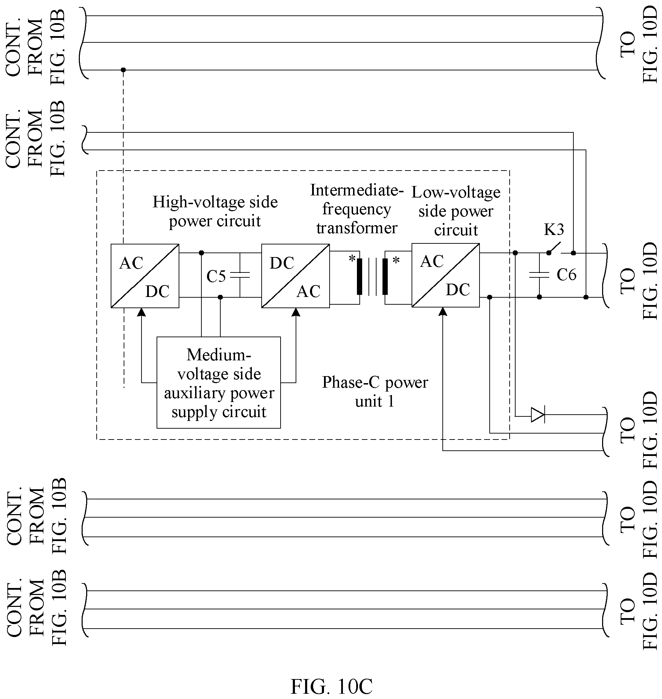

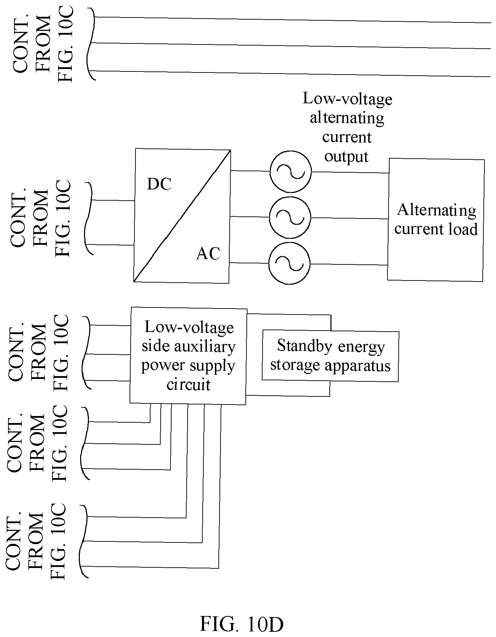

In another example, based on FIG. 9A, FIG. 9B, FIG. 9C, and FIG. 9D, FIG. 10A, FIG. 10B, FIG. 10C, and FIG. 10D are a schematic diagram of a structure of a solid-state transformer according to still another embodiment of this application. In an example in which an input is a three-phase medium-voltage alternating current, each phase circuit of a three-phase medium-voltage alternating current input circuit only includes a power unit 1, and an output is a low-voltage alternating current, specific structural descriptions of a phase-A power unit 1, a phase-B power unit 1, and a phase-C power unit 1 in the solid-state transformer are as described in the embodiment in FIG. 9A, FIG. 9B, FIG. 9C, and FIG. 9D. Details are not described herein again.

A low-voltage direct current output side in each power unit 1 of the phase-A power unit 1, the phase-B power unit 1, and the phase-C power unit 1 is connected to the low-voltage side auxiliary power supply circuit through a diode, to supply power to the low-voltage side auxiliary power supply circuit.

The low-voltage side auxiliary power supply circuit is further configured to supply power to a low-voltage side power circuit in the phase-A power unit 1, a low-voltage side power circuit in the phase-B power unit 1, and a low-voltage side power circuit in the phase-C power unit 1.

In the solid-state transformer shown in FIG. 10A, FIG. 10B, FIG. 10C, and FIG. 10D, an output end of a three-phase low-voltage direct current is connected to a DC-AC inverter circuit. The DC-AC inverter circuit is configured to convert a low-voltage direct current output by the low-voltage side power circuit to a low-voltage alternating current. Then, a three-phase alternating current output is connected to an alternating current load to supply power to the alternating current load.

Each phase circuit of a three-phase medium-voltage alternating current input circuit further includes a switch unit, for example, a switch unit K1, a switch unit K2, or a switch unit K3, configured to: when the solid-state transformer is started, disconnect the phase-A power unit 1, the phase-B power unit 1, and the phase-C power unit 1 from an output end that is in the solid-state transformer and that is connected to the alternating current load and from a DC-AC inverter circuit, shown in FIG. 10A, FIG. 10B, FIG. 10C, and FIG. 10D, that is connected to a capacitor C6; and when a voltage in the solid-state transformer reaches a preset stable voltage value, connect the phase-A power unit 1, the phase-B power unit 1, and the phase-C power unit 1 to the output end that is in the solid-state transformer and that is connected to the alternating current load and to the DC-AC inverter circuit, shown in FIG. 10A, FIG. 10B, FIG. 10C, and FIG. 10D, that is connected to the capacitor C6. That is, when the voltage in the solid-state transformer reaches the preset stable voltage value, the switch unit K1, the switch unit K2, and the switch unit K3 are turned on, to prevent a case in which a low-voltage side direct current output is low when the solid-state transformer is started, causing a low low-voltage alternating output converted through the DC-AC inverter circuit, and a low alternating current load voltage.

The low-voltage side auxiliary power supply circuit is further connected to a standby energy storage apparatus that is configured to store electric energy when the solid-state transformer works normally. When the power units 1 in all phase circuits of the three-phase input circuit including phases A, B, and C in the solid-state transformer encounter a problem at the same time, that is, three low-voltage direct current outputs cannot supply power to the low-voltage side auxiliary power supply circuit, the standby energy storage apparatus may be configured to supply power to the low-voltage side auxiliary power supply circuit in an emergency; and it may be determined that the solid-state transformer is faulty, and a fault signal is sent out, so that related personnel can discover and handle the problem in time, and then reliability of power supply to the low-voltage side auxiliary power supply circuit is improved.

In comparison with a solution in the conventional technology in which a costly and heavy power frequency transformer is used to supply power to the low-voltage side auxiliary power supply circuit, the solid-state transformer provided in this application does not need a power frequency transformer that supplies power to an auxiliary power supply, and additional 10 kV medium-voltage insulation; the low-voltage direct current output by the solid-state transformer is used to independently supply power to the low-voltage side auxiliary power supply circuit; and at least two low-voltage direct current outputs back up each other. Therefore, reliability of power supply to the low-voltage side auxiliary power supply circuit is ensured, and use costs of the solid-state transformer are reduced.

Further, to prevent a low load voltage when the solid-state transformer is started, a solution of adding a switch unit in the solid-state transformer to control a load is used. For a case in which at least two low-voltage direct current outputs supplying power to the low-voltage side auxiliary power supply circuit encounter a problem at the same time, the standby energy storage apparatus is further added to supply power to the low-voltage side auxiliary power supply circuit in an emergency; and it is determined that the solid-state transformer is faulty, and a fault signal is sent out, so that related personnel can discover and handle the problem in time. Further, reliability of power supply to the low-voltage side auxiliary power supply circuit is ensured, and costs of the solid-state transformer are reduced.

Optionally, this application further provides a data center. The data center includes a physical server, a communication device, and the solid-state transformer according to the foregoing embodiments. The physical server includes a processor, a hard disk, and a system bus. The communication device includes a router and a switch.

Optionally, this application further provides an electronic device. The electronic device includes the solid-state transformer according to the foregoing embodiments.

Optionally, this application further provides a power supply. The power supply includes the solid-state transformer according to the foregoing embodiments, and is specifically applied to a charging pile.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the function is implemented in a form of a software functional unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A solid-state transformer, wherein the solid-state transformer comprises a first phase circuit, an input end of the first phase circuit is connected to a single-phase medium-voltage alternating current, an output end is connected to an output end of a low-voltage direct current, the first phase circuit comprises N power units, and N is an integer greater than or equal to 1;
each of the N power units comprises an input end and an output end, input ends of the N power units comprised in the first phase circuit are connected in series and are connected to the single-phase medium-voltage alternating current, and output ends of the N power units comprised in the first phase circuit are connected in parallel and are connected to the output end of the low-voltage direct current; and
the solid-state transformer further comprises a low-voltage side auxiliary power supply circuit, the low-voltage side auxiliary power supply circuit is connected to the output end of the low-voltage direct current, first direct currents output from the output ends of the N power units are used to supply power to the low-voltage side auxiliary power supply circuit, and the first direct current is the low-voltage direct current.

2. The solid-state transformer according to claim 1, wherein that the solid-state transformer further comprises a low-voltage side auxiliary power supply circuit comprises: the low-voltage side auxiliary power supply circuit supplies power to at least a part of functional circuits in a low-voltage side power circuit in each power unit.

3. The solid-state transformer according to claim 2, wherein the low-voltage side auxiliary power supply circuit supplies power to the at least a part of functional circuits in the low-voltage side power circuit in each power unit, and the at least a part of functional circuits comprise, but not limited to, a low-voltage side detection circuit, a low-voltage side control circuit, a low-voltage side communication circuit, and a low-voltage side fan circuit.

4. The solid-state transformer according to claim 1, wherein that the first phase circuit comprises N power units comprises: each of the N power units comprises a high-voltage side power circuit, an intermediate-frequency transformer, and a low-voltage side power circuit that are sequentially connected; and
that each power unit comprises an input end and an output end comprises:
the input end is an input end of the high-voltage side power circuit, and the output end is an output end of the low-voltage side power circuit.

5. The solid-state transformer according to any one of claims 1 to 4, wherein the solid-state transformer comprises the first phase circuit; and the solid-state transformer further comprises a second phase circuit and a third phase circuit, output ends of the first phase circuit, the second phase circuit, and the third phase circuit are connected in parallel and are connected to the output end of the low-voltage direct current, the first phase circuit, the second phase circuit, and the third phase circuit have a same or similar circuit structure, and the first phase circuit is any one of the first phase circuit, the second phase circuit, and the third phase circuit.

6. The solid-state transformer according to claim 5, wherein starting from an input point of the single-phase medium-voltage alternating current of the first phase circuit, the N power units are sequentially represented as a power unit 1, a power unit 2, ..., and a power unit N, the first phase circuit comprises a power unit X, and the power unit X is any one of the N power units; and
when the solid-state transformer is started, if the solid-state transformer comprises the first phase circuit, a first direct current output by the power unit X in the first phase circuit is used to supply power to the low-voltage side auxiliary power supply circuit; or if the solid-state transformer comprises a multi-phase circuit, first direct currents output by power units X at identical positions in all phase circuits of the multi-phase circuit are used to supply power to the low-voltage side auxiliary power supply circuit.

7. The solid-state transformer according to claim 6, wherein when a voltage in the solid-state transformer reaches a preset stable voltage value, all power units in the first phase circuit or in each phase circuit of the multi-phase circuit output first direct currents to supply power to the low-voltage side auxiliary power supply circuit.

8. The solid-state transformer according to claim 6 or 7, wherein the first phase circuit further comprises a switch unit, the switch unit is connected between the power unit X and an output end that is in the solid-state transformer and that is connected to a load, and the switch unit is configured to: when the solid-state transformer is started, disconnect the power unit X from the output end that is in the solid-state transformer and that is connected to the load; and when the voltage in the solid-state transformer reaches the preset stable voltage value, connect the power unit X to the output end that is in the solid-state transformer and that is connected to the load.

9. The solid-state transformer according to claim 8, wherein the switch unit comprises a relay or a semiconductor power switch.

10. The solid-state transformer according to any one of claims 1 to 9, wherein the solid-state transformer further comprises a standby energy storage apparatus, and the standby energy storage apparatus is connected to the low-voltage side auxiliary power supply circuit; and when all low-voltage side power circuits in the solid-state transformer cannot supply power to the low-voltage side auxiliary power supply circuit, the standby energy storage apparatus is configured to supply power to the low-voltage side auxiliary power supply circuit.

11. The solid-state transformer according to claim 10, wherein the standby energy storage apparatus comprises a battery or a capacitor.

12. The solid-state transformer according to any one of claims 1 to 11, wherein the single-phase medium-voltage alternating current is an alternating current with a voltage value greater than or equal to a first threshold, and the low-voltage direct current is a direct current with a voltage value less than the first threshold.

13. The solid-state transformer according to any one of claims 1 to 12, wherein that each power unit comprises a high-voltage side power circuit, an intermediate-frequency transformer, and a low-voltage side power circuit that are sequentially connected specifically comprises:
N high-voltage side power circuits that are in the first phase circuit and that have a one-to-one correspondence with the N power units perform voltage division on the single-phase medium-voltage alternating current, an output end of the high-voltage side power circuit is connected to an input end of the intermediate-frequency transformer, and the high-voltage side power circuit is configured to: input a first alternating current at a first frequency, convert the first alternating current to a second alternating current at a second frequency, and output the second alternating current, wherein the second frequency is greater than the first frequency, and the first alternating current is a medium-voltage alternating current;
an output end of the intermediate-frequency transformer is connected to an input end of the low-voltage side power circuit, the intermediate-frequency transformer is configured to: input the second alternating current, and convert the second alternating current to a third alternating current at the second frequency, and the intermediate-frequency transformer is further configured to: electrically isolate the high-voltage side power circuit from the low-voltage side power circuit; and
the low-voltage side power circuit is configured to: input the third alternating current, convert the third alternating current to the first direct current, and output the first direct current.

14. The solid-state transformer according to claim 13, wherein the high-voltage side power circuit comprises a first AC-DC rectifier circuit, a first DC-AC inverter circuit, a high-voltage side detection circuit, a high-voltage side control circuit, and a high-voltage side drive circuit, the first AC-DC rectifier circuit is configured to convert the first alternating current to a third direct current, the first DC-AC inverter circuit is configured to convert the third direct current to the second alternating current, the high-voltage side detection circuit is configured to detect whether a voltage in the first AC-DC rectifier circuit and the first DC-AC inverter circuit meets a preset voltage range and whether a current meets a preset current range, the high-voltage side control circuit is configured to control conversion from an alternating current to a direct current in the first AC-DC rectifier circuit and conversion from a direct current to an alternating current in the first DC-AC inverter circuit, and the high-voltage side drive circuit is configured to drive the first AC-DC rectifier circuit and the first DC-AC inverter circuit, so that the first AC-DC rectifier circuit and the first DC-AC inverter circuit work normally.

15. The solid-state transformer according to claim 13, wherein the low-voltage side power circuit comprises a second AC-DC rectifier circuit, a low-voltage side detection circuit, a low-voltage side control circuit, a low-voltage side communication circuit, and a low-voltage side fan circuit, the second AC-DC rectifier circuit is configured to convert the third alternating current to the first direct current, the low-voltage side detection circuit is configured to detect whether a voltage in the second AC-DC rectifier circuit meets a preset voltage range and whether a current meets a preset current range, the low-voltage side control circuit is configured to control conversion from an alternating current to a direct current in the second AC-DC rectifier circuit, the low-voltage side communication circuit is configured to transfer a running state of the solid-state transformer, and the low-voltage side fan circuit is configured to perform heat dissipation on the solid-state transformer.

16. The solid-state transformer according to any one of claims 1 to 15, wherein if the output end that is in the solid-state transformer and that is connected to the load is connected to an alternating current load, the solid-state transformer further comprises a second DC-AC inverter circuit, the second DC-AC inverter circuit is located between output ends of N low-voltage side power circuits that are in the first phase circuit and that have a one-to-one correspondence with the N power units and the output end that is in the solid-state transformer and that is connected to the load, the second DC-AC inverter circuit is configured to convert the first direct current to a low-voltage alternating current, and the low-voltage alternating current is used to supply power to the alternating current load.

17. A data center, wherein the data center comprises a physical server, a communication device, and the solid-state transformer according to any one of claims 1 to 16, the physical server comprises a processor, a hard disk, and a system bus, and the communication device comprises a router and a switch.

18. An electronic device, wherein the electronic device comprises the solid-state transformer according to any one of claims 1 to 16.

19. A power supply, wherein the power supply comprises the solid-state transformer according to any one of claims 1 to 16.

20. The power supply according to claim 19, wherein the power supply is applied to a charging pile.
